# EUROPEAN PATENT SPECIFICATION

(11) **EP 3 211 049 B1**
(45) Date of publication and mention of the grant of the patent: **17.02.2021**
(21) Application number: 16157757.2
(22) Date of filing: 26.02.2016
(51) Int. Cl.: C09D 161/20, C09D 171/02

(54) **COATING COMPOSITION**
BESCHICHTUNGSZUSAMMENSETZUNG
COMPOSITION DE REVETEMENT

(30) Priority: 03.04.2015 EP 15248042
(43) Date of publication of application: 30.08.2017
(73) Proprietor: Holland Novochem Technical Coatings B.V., 3994 DJ Houten (NL)
(72) Inventor: BIJPOST, Erik Alexander, 3436 ZD Nieuwegein (NL); MASLOW, Alexander, 7411 PT Deventer (DE)
(74) Representative: Van den Berg, Frans Richard

(56) References cited:
- EP-A1- 3 075 801
- WO-A1-2012/162298
- WO-A2-2008/036629
- GB-A- 1 308 697
- US-A- 4 154 891
- US-A1- 2002 132 935

## Description

The present invention relates to coating compositions, coated substrates and processes for preparing the coated substrate.

Coating compositions suitable for coating substrates, and in particular for use in food and beverage cans, are well known in the art. Such coating compositions have to comply to many requirements: these compositions need to be storage stable and easily and readily applicable to the substrate. The cured coating compositions should further prevent corrosion, exhibit a good balance between hardness and elasticity, must adhere well to the substrate surface and may expose a low amount of volatile organic compounds (VOC). Many have developed coating compositions comprising improved binder systems and/or specific additives. Examples of such developments can be found in WO 2012/089657, WO 13/180067 and WO 15/002961. Generally, such compositions and/or binder systems are complex and relatively expensive.

Some developments have used a combination of a polyol resin and an aminoplast. WO 01/64801 discloses coating composition comprising a specific polyol comprising polytrimethylene carbonate polyol fragments and melamine as crosslinking agent.

Also WO 01/55239 describes coating compositions comprising aminoplast and a polyester or copolymer of polyester and polycarbonate.

US 4,528,344 mentions coating composition comprising an aminoplast and a non-aromatic polyol having a molecular weight below 230.

Coating compositions comprising one or more polyols, such as acrylic resin and a sucrose polyol as disclosed in Example 1 of WO 2012/162298, and a melamine are described. The polyols have been applied in weight excess over the melamine.

US 4,154,891 discloses coating compositions comprising an hydroxyl-containing polymer derived from urethane having a hydroxyl value below 50, and an amine-aldehyde condensate.

GB 1 308 697 describes compositions comprising aliphatic polyol and a melamine compound.

WO 08/036629 discloses coating compositions comprising a polyol resin and a crosslinker (e.g. an aminoplast) and a titanium-containing and/or zirconium-containing catalyst.

These publications use the aminoplast to crosslink the polyol, which may not lead to the optimal cured coating composition.

The objective of the present invention is to provide improved coating compositions.

The present invention pertains to a coating composition according to the present claims comprising a first resin, preferably a polyol, and an aminoplast, and/or an adduct of a first resin and an aminoplast wherein the molar ratio of the first functional groups of the aminoplast and the second functional groups of the first resin, preferably the polyol, is at least 1, and the aminoplast is present in an amount of at least 60 wt%, based on the total weight of first resin and aminoplast and wherein the coating composition comprises water as solvent and solids in an amount of at least 50 wt %. The composition of the invention contains an excess of functional groups of the aminoplast as compared to the functional groups of the first resin, preferably the polyol. This means that the aminoplast will also self-condensate when exposed to curing conditions. The aminoplast hence does not serve as crosslinking agent only as is generally the case in the prior art, but also forms oligomers and/or polymers of the aminoplast which may subsequently react with the first resin, preferably the polyol. This leads to a unique resin that is not disclosed in any of the cited references. The coating composition of the invention is furthermore relatively simple compared to known compositions, and is therefore commercially and economically more attractive. The composition is generally easy to formulate. Moreover, the coating composition of the invention can be readily applied to substrate surfaces even at high speeds using conventional coating devices. The inventive composition enables the formation of a cured coating that exhibits good retort-sterilisable properties, enhanced resistance towards chemicals, good adhesion to a wide variety of substrates, good abrasion resistance, and compatibility to a wide variety of inks. The color intensity of the inks may be improved allowing the use of a lower amount of ink. The coating composition of the invention generally has good leveling characteristics and leads to cured coatings with improved gloss and transparency. The coating composition further enables good coverage of tactile surfaces and structured surfaces such as coarse surfaces, and allows such structures to be present (touch and feel) after application of the (cured) coating composition of the invention.

Coating compositions comprising one or more polyols, such as acrylic resin and a sucrose polyol as disclosed in Example 1 of WO 2012/162298, and a melamine are described. The polyols have been applied in weight excess over the melamine.

US 4,154,891 discloses coating compositions comprising an hydroxyl-containing polymer derived from urethane having a hydroxyl value below 50, and an amine-aldehyde condensate.

GB 1 308 697 describes compositions comprising aliphatic polyol and a melamine compound.

WO 08/036629 discloses coating compositions comprising a polyol resin and a crosslinker (e.g. an aminoplast) and a titanium-containing and/or zirconium-containing catalyst.

In the context of this application the term "functional group(s)" refers to the reactive group(s) taking part in the curing process. Examples of such functional groups of the first resin, preferably the polyol, include hydroxyl (-OH), carboxylic acid (-COOH), carboxylic ester (-COOR), linear carbonates (R-CO₃), cyclic carbonates, oxirane, oxetane, anhydrides (R-CO-O-CO-R'), and thiol (-SH). Examples of functional groups for aminoplasts include amine (-NH₂), amide (-NHR), ether (-N-R-O-R') and alcohol (N-R-OH). R and R' represent substituents, which may be chosen as desired. Also other components of the coating composition of the invention may comprise functional groups capable of reacting with the first and/or second functional groups. Examples of such components include solvents and other resins. It is further noted that the first resin and/or the aminoplast may further comprise non-reactive functional groups, like (non-reactive) ether groups or aliphatic hydrocarbon groups, that do not react with either the first resin and/or aminoplast, but may contribute to improving the properties of the coating composition.

The molar ratio between the first and second functional groups is at least 1. Preferably, the ratio is at least 2, more preferably at least 5, even more preferably at least 8, even more preferably at least 10, and most preferably at least 15, and preferably at most 100, more preferably at most 75, even more preferably at most 50, and most preferably at most 40. As mentioned, the ratio expresses an excess of the aminoplast being present in the coating composition of the invention. This excess enables the aminoplast to react with itself under curing conditions, and thus form a unique network of cured resin. It is noted that the aminoplast tends to react more readily with the polyol than with itself. The prior art generally uses a (much) lower ratio between the first and second functional groups, and consequently self-condensation of the aminoplast will not proceed or proceed to a much lower extent than in the composition of the invention. The skilled person will be able to determine the presence of such self-condensed aminoplast parts by using conventional analytical techniques such as ¹H NMR, ¹³C NMR, ¹⁴N NMR, near infrared spectroscopy (NIR), FT infrared spectroscopy (FT-IR) and Raman spectroscopy.

The first resin of the invention can be any resin known in the art that comprises the said second functional groups. The first resin is preferably a polyol. The polyol of the invention can be any polyol known in the art. The first resin, preferably the polyol, of the invention generally comprises second functional groups is at least one selected from the group consisting of hydroxyl (-OH), carboxylic ester (-COOR), carboxylic acid (-COOH), linear carbonates (R-CO₃), cyclic carbonates, oxirane, oxetane, anhydrides (R-CO-O-CO-R'), and thiol (-SH). Preferably, the second functional group is at least one selected from the group of hydroxyl (-OH), carboxylic ester (-COOR), and carboxylic acid (-COOH), more preferably selected from the group consisting of hydroxyl (-OH) and carboxylic acid (-COOH). When the second functional group is hydroxyl, the hydroxyl may be a primary, secondary or tertiary alcohol. Of these hydroxyl groups the primary alcohol is preferred. The substituents R and R' can be any suitable substituent known in the art, and include alkyl(ene), aryl(ene), and aralkyl(ene). The first resin, preferably the polyol, may have more than one functional group, e.g. the first resin, preferably the polyol, may contain both hydroxyl and carboxylic acids groups.

The first resin, preferably the polyol, may have an average functionality between 2 and 8. Preferably the average functionality is at most 5, more preferably at most 4 and even more preferably at most 3. In an embodiment of the invention, the first resin, preferably the polyol, comprises a second functional group being hydroxyl, and an average hydroxyl functionality between 2 and 8, preferably at most 5, more preferably at most 4 and even more preferably at most 3.

In the context of this application, the term "average functionality" or "average hydroxyl functionality" refers to the average number of functional groups or hydroxyl groups per monomer or monomeric unit in a resin.

The first resin, preferably the polyol, of the invention may be a monomer, an oligomer or polymer. In one embodiment, the first resin is preferably a monomer. Polymeric first resins, preferably polymeric polyols, may include polyesters, polyacrylates, and copolymers thereof. Of these polymeric polyols polyesters are preferred. Oligomers of the first resin refer to dimers, trimers and tetramers of the monomers of the first resin. Oligomeric polyols include dimers, trimers and tetramers of monomeric diols and/or triols. In one embodiment, the first resin may be modified by monomers, dimers or polymers having no functional groups. Modifications with monomers, dimers or polymers that are capable of hydrolyzing after curing are less preferred. Examples of suitable monomeric polyols comprising hydroxyl functional groups include 1,4-butanediol, 1,3-butanediol, 1,5-pentanediol, 1,6-hexanediol, 2,5-hexanediol, 2-methyl-1,3-pentanediol, 2-ethyl-1,3-hexanediol, 2,2-dimethyl-1,3-pentanediol, 1,4-cyclohexanediol, trimethylolethane, trimethylolpropane, pentaerythritol, dipentaerythritol, 1,4-cyclohexanedimethanol, 1,2-bis(hydroxymethyl)cyclohexane, 1,2-bis(hydroxyethyl)cyclohexane, trimethylolpropane, 2,2-dimethyl-3-hydroxypropyl-2,2-dimethyl-hydroxyproprionate, diethylene glycol, triethylene glycol, dipropylene glycol, tetraethylene glycol, trimethylolethane, glycerol, and sorbitol; and polyols comprising oxirane functional groups bisphenol A, bisphenol F, bisphenol S, alkoxylated bisphenol A such as ethoxylated bisphenol A and propoxylated bisphenol A and alkoxylated bisphenol F, such as ethoxylated bisphenol F and propoxylated bisphenol F; polyols comprising oxirane functional groups bisphenol A diglycidyl ether, 2,2'-bis(4-hydroxyphenyl)propane bis(2,3-epoxypropylether, bisphenol F diglycidyl ether, novolac glycidyl ether, ethoxylated bisphenol A and propoxylated bisphenol A. Of these polyol monomers the monomers comprising bisphenol A are preferred, in particular bisphenol A, the ethoxylated and/or propoxylated bisphenol A are preferred. It is contemplated that two or more first resins, preferably polyols, can be used in the coating compositions of the invention. When two or more first resins, preferably polyols, are present in the coating composition, the total number of second functional groups in the two or more first resins is used in the calculation of the molar ratio of first and second functional groups.

Examples of polyacrylate resins include polymers derived from one or more of acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, 3-hydroxypropyl methacrylate, hydroxystearyl acrylate and hydroxystearyl methacrylate. Copolymers of two or more of the aforementioned resins are also contemplated as long as the resulting resin contains reactive groups as is required by the invention.

The first resin, preferably the polyol, of the invention may preferably have a weight average molecular weight (Mw) of at most 100,000, more preferably at most 50,000, even more preferably at most 20,000 and most preferably at most 10,000, and preferably at least 200, more preferably at least 250 and most preferably at least 300. When the first resin, preferably a polyol, is a monomer, the first resin may preferably have a weight average molecular weight (Mw) of at most 10,000, more preferably at most 5,000, even more preferably at most 2,000 and most preferably at most 1,000, and preferably at least 200, more preferably at least 250 and most preferably at least 300.

The first resin, preferably the polyol, of the invention may preferably have a hydroxyl value of at least 50, more preferably at least 60, even more preferably at least 75, and most preferably least 100. The hydroxyl value of a first resin can be measured using standard methods, such as the method of ASTM E-222-76. In another preferred embodiment of the invention, the first resin has at least one second functional group per six monomeric units in the first resin, preferably at least one second functional group per three monomeric units, more preferably at least one second function group per monomeric unit. A higher functionality, in particular of hydroxyl groups, of the first resin generally leads to improved properties of the resulting cured coating. Such a high functionality generally does not undesirably impact the brittleness or reduce impact resistance of the cured coating composition.

The aminoplast of the invention can be any aminoplast known in the art. The aminoplast is generally a condensation product of an aldehyde and melamine, benzoguanamine, urea or similar compounds resulting in an amine resin or an amide resin. The aminoplast of the invention generally comprises first functional groups of which at least one is selected from the group consisting of amine (-NH₂), amide (-NHR), ether (-N-R-O-R') and alcohol (N-R-OH). Preferably, the second functional group is at least one selected from the group of amide (-NHR) and ether (-N-R-O-R'). The substituents R and R' can be any suitable substituent known in the art, and include alkyl(ene), aryl(ene), and aralkyl(ene). The aminoplast may have more than one functional group, e.g. the aminoplast may contain both ether and alcohol groups.

The aminoplast may have an average functionality between 2 and 8. Preferably the average functionality is at most 7, and most preferably at most 6, and preferably at least 3 and most preferably at least 4.

The aminoplast of the invention may be a monomer, an oligomer or polymer. Polymeric aminoplasts may include melamine resin, dicyanimide resin, glycoluril resins, urea resins and copolymers thereof. Of these polymeric aminoplasts melamine resins are preferred. Oligomeric aminoplasts include dimers, trimers and tetramers of monomeric aminoplasts. Examples of suitable monomeric aminoplasts include condensation products of an aldehyde and methylurea, glycoluril, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 2,4,6-triethyl-triamino-1,3,5-triazine, 1,3,5-triaminobenzene and melamine. Of these aminoplasts aldehyde condensation products with melamine are preferred. Suitable aldehydes include formaldehyde, acetaldehyde, crotonaldehyde, acrolein, benzaldehyde, and furfural. Formaldehyde is the preferred aldehyde. Further modification of the aminoplasts are also considered, including etherification with a monoalcohol, such as methanol, ethanol, propanol, butanol, pentanol, hexanol and heptanol. Examples of such aminoplasts include hexamethoxymethyl melamine (Cymel 300 and Cymel 303), butylated melamine formaldehyde resin (Cymel 1156 and Cymel 1158 and Cymel MB-14), and partially butylated, methylated melamine formaldehyde resin (Cymel 1130) and butoxylated glycoluril formaldehyde resin, such as Cymel 1170. Of these hexamethoxymethyl melamine is preferred. Further examples of aminoplasts include derivatives of methylurea, glycoluril, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 2,4,6-triethyl-triamino-1,3,5-triazine, 1,3,5-triaminobenzene and melamine, wherein the derivative comprises functional groups selected from the group consisting of vinyl, oxetane, carboxylic acid, hydroxyl and thiol. Examples of such derivatives include derivative of glycoluril such as TA-G, TG-G, TC-G, TH-G and TS-G. The invention also contemplates using two or more of such aminoplasts. When two or more aminoplasts are present in the coating composition, the total number of first functional groups in the two or more aminoplasts is used in the calculation of the molar ratio of first and second functional groups.

The aminoplast of the invention may preferably have a weight average molecular weight (Mw) of at most 5,000, more preferably at most 2,000, even more preferably at most 1,000 and most preferably below 600, and preferably at least 200, more preferably at least 250 and most preferably at least 300.

The invention further pertains to coating compositions comprising an adduct of the first resin and the aminoplast. In the context of this application the wording "adduct" refers to reaction products of a first resin and an aminoplast, preferably of monomers of a first resin and an aminoplast, wherein the resulting adduct maintains at least two functional groups enabling polymerization and/or cross-linking of the adduct. It is contemplated that the coating composition comprises the adduct alone, and also combinations of adduct and first resin, combinations of adduct and aminoplast, and combinations of adduct, first resin and aminoplast. Examples of such adducts include reaction products of the monomers of the first resin, preferably the polyol, and the aminoplast as described above. Such adducts are typically formed under conditions where only the adduct is formed and no or only to a small extent polymerization and/or cross-linking occurs. The coating composition of the invention preferably comprises adducts of the first resin and the aminoplast, wherein the amount of polymerized and/or cross-linked product is at most 5 wt%, based on the total weight of aminoplast and first resin. Preferably, the polymerized and/or cross-linked product of the aminoplast and first resin is present in an amount of at most 2 wt%, more preferably at most 1 wt%, even more preferably at most 0.5 wt%. Even more preferably, the coating composition is substantially free from polymerized and/or cross-linked product, and most preferably the coating composition is completely free from polymerized and/or cross-linked product. The term "substantially free" means that less than 100 parts per million of the polymerized and/or cross-linked product is present in the coating composition. The term "completely free" means that the cured coating contains less than 20 parts per billion (ppb) of polymerized and/or cross-linked product.

The functional groups of the adduct may be the functional groups derived from the first resin, preferably the polyol, and/or from the aminoplast. The molar ratio of functional groups in adducts should be considered as the molar ratio of the second functional groups of the first resin and of the first functional groups of the monomeric aminoplast, preferably the monomeric aminoplast, as present in the first resin per se and the aminoplast per se (thus prior to reacting to the adduct). The molar ratio of the second functional groups of the first resin of the adduct, preferably the monomeric first resin, and the aminoplast of the adduct, preferably the monomeric aminoplast, is at least 1. Preferably, the ratio is at least 2, more preferably at least 5, even more preferably at least 8, even more preferably at least 10, and most preferably at least 15, and preferably at most 100, more preferably at most 75, even more preferably at most 50, and most preferably at most 40.

As described in the present claims the coating composition comprises the aminoplast in an amount of at least 60 wt%, even more preferably at least 65 wt% and most preferably at least 70 wt%, and preferably at most 99 wt%, more preferably at most 95 wt%, even more preferably at most 90 wt% and most preferably at most 85 wt%, based on the total weight of the first resin and the aminoplast.

The coating composition of the invention comprises the first resin in an amount of at most Z 40 % by even more preferably at most 35 wt% and most preferably at most 30 wt%, and preferably at least 1 wt%, more preferably at least 5 wt%, even more preferably at least 10 wt% and most preferably at least 15 wt%, based on the total weight of the first resin and the aminoplast.

In one embodiment of the invention, the coating composition comprises the aminoplast in an amount of at least 50 % by weight (wt%), based on the total weight of solids in the coating composition. Preferably, the aminoplast is present in an amount of at least 55 wt%, more preferably at least 60 wt%, even more preferably at least 65 wt% and most preferably at least 70 wt%, and preferably at most 99 wt%, more preferably at most 95 wt%, even more preferably at most 90 wt% and most preferably at most 85 wt%, based on the total weight of solids.

The coating composition of the invention comprises the polyol in an amount of at most 40 % by weight (wt%), based on the total weight of the polyol and the aminoplast. Preferably, the polyol is present in an amount of at most 35 wt% and most preferably at most 30 wt%, and preferably at least 1 wt%, more preferably at least 5 wt%, even more preferably at least 10 wt% and most preferably at least 15 wt%, based on the total weight of the polyol and the aminoplast.

The coating composition of the invention comprises the polyol in an amount of at most 50 % by weight (wt%), based on the total weight of solids in the coating composition. Preferably, the polyol is present in an amount of at most 45 wt%, more preferably at most 40 wt%, even more preferably at most 35 wt% and most preferably at most 30 wt%, and preferably at least 1 wt%, more preferably at least 5 wt%, even more preferably at least 10 wt% and most preferably at least 15 wt%, based on the total weight of solids.

As described in the present claims the coating composition comprises solids in an amount of at least 50 wt%, more preferably at least 60 wt%, even more preferably at least 65 wt% and most preferably at least 70 wt%, and preferably at most 95 wt%, more preferably at most 90 wt%, even more preferably at most 80 wt% and most preferably at most 75 wt%, based on the total weight of the coating composition. The term "solids" is known to the man skilled in the art, and generally refers to the solid or non-volatile material in the coating composition; typically the solids include the resins, pigments, dyes, catalyst, etc. and does not include solvents that evaporate during the curing process. The amount if solids may also be referred to as "solids content".

The remaining part of the coating composition may be comprised of other components commonly used in coating compositions. With the first resin and the aminoplast the other components add up to 100 wt% of the total weight of the coating composition.

As described in the present claims, the coating composition comprises water as solvent, in particular as the reactive solvent.

Examples of non-reactive solvents include Solvent Naphtha®, heavy benzene, various Solvesso® grades, various Shellsol® grades and Deasol®, various white spirits, mineral turpentine oil, tetralin, decalin, methyl ethyl ketone, acetone and methyl n-propyl ketone. Non-reactive solvents that are incorporated at least partially and preferably completely, into the cured resin are preferred. Preferably, the non-reactive solvent has a boiling point above the curing temperature, preferably above 250 °C. The coating composition of the invention may comprise a reactive solvent and a non-reactive solvent, a combination of two or more solvents, or a combination of two or more reactive solvents. Coating compositions comprising a reactive solvent are preferred.

The coating composition of the invention may comprise the non-reactive solvent and/or the reactive solvent in an amount of at most 30 % by weight (wt%), based on the total weight of the coating composition. Preferably, the non-reactive solvent and/or the reactive solvent is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

The coating composition may further comprise additives commonly used in coating compositions including pigments and dyes, surfactants, flow controlling agents, thixotropic agents, anti-gassing agents, ultraviolet light stabilizers, adhesion enhancing promoters, waxes, filling agents, matting agents, defoamers and curing catalysts. The additives can be any additive known in the art. Examples of pigments and dyes include metal oxides like titanium dioxide, iron oxide, zinc oxide and chromium oxide; metal hydroxides; metal sulfides, metal sulfates, metal carbonates such as calcium carbonate; carbon black, china clay, phthalo blues and greens, organo reds and other organic dyes. The coating compositions of the invention may increase the color intensity of the pigments and dyes. This may lead to a reduction in the total amount of pigment and/or dye used. The curing catalyst is preferably one or more superacids and/or superacid precursors. Examples of suitable curing catalysts include p-toluenesulfonic acid, xylenesulfonic acid, dodecyl benzene sulfonic acid, dinonyl naphthalene sulfonic acid, dinonyl naphthalene disulfonic acid, fluorosulfuric acid, trifuoromethane sulfonic acid, hexafluoro antimonate compounds and catalysts derived thereof, phosphoric acid and sulfuric acid. Examples of ultraviolet light stabilizers include benzophenone, such as hydroxydodecyl benzophenone, 2,4-dihydroxy-3',5'-di-t-butylbenzophenone, 2-hydroxy-4-acryloxyethoxybenzophenone and 2-hydroxy-4-methoxy-2'-carboxybenzophenone.

The coating composition of the invention may comprise the additives in an amount of at most 30 % by weight (wt%), based on the total weight of the coating composition. Preferably, the additive is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

The invention further pertains to a process for preparing a coated substrate comprising the steps of: (a) applying the coating composition according to the invention to a substrate; and (b) curing the coating composition. The process may further comprise the step of shaping the coated substrate to a food or beverage container.

The invention also pertains to a coated substrate coated substrate comprising a substrate and a cured coating composition applied to at least part of the substrate, the coating composition being in accordance with the invention. In an embodiment of the invention the coated substrate is a food or beverage container. The cured coating composition has all the advantages as described above for the cured coating composition. A further advantage of the cured coating composition is that the volatile organic compounds (VOC) level is generally very low. The VOC level is typically determined using standard method ASTM D3960-05(2013). The amount of VOC in the coating composition of the invention is generally at most 100 g/l, preferably at most 75 g/l, more preferably at most 60 g/l, and most preferably at most 50 g/l.

The substrate of the invention can be any substrate known in the art. The substrate may be porous or non porous. Examples of suitable substrates include metals, such as aluminum, aluminum alloys, steel, steel alloys, tin, tin allows, zinc, zinc alloys, chrome and chrome alloys; glass such as fused silica glass, aluminosilicate glass, soda-lime-silica glass, borosilicate glass and lead-oxide glass; ceramics, such as porcelain, bone china, alumina, ceria, zirconia, carbides, borides, nitrides and silicides; plastic such as functionalized polyethylene (PE), functionalized polypropylene (PP), polyethylene terephthalate (PET), polyvinyl chloride (PVC) and nylons; and wood. Preferably, the substrate is metal, in particular aluminum.

In the context of the present application the term "cure" or "cured" refers to the process of hardening of the coating composition by polymerization and/or crosslinking. This curing process can be initiated by exposure to ultraviolet radiation, heat, such as by infrared radiation, by microwave radiation or by heating, e.g. in an oven, electron beams and chemical additives. The coating compositions of the invention preferably cure through exposure to ultraviolet radiation and heat, preferably through heat.

In a further embodiment of the invention, the coating composition of the invention can be used in application where corrosion protection and/or cured coating flexibility and formability are required. Examples of such applications include coil coating applications, car refinish, and automotive applications.

The invention is exemplified in the following Examples.

### Examples

### Examples 1 to 5

Bright 33 cl aluminum cans were provided with 40 to 60 mg of ink by using a roll coater system. The inks are typically used in 2-piece beer and beverage can production. The colors studied, supplied by INX International Ink Co, are black, green, red, blue and yellow. The white ink is produced by DIC Corporation.

The wet inked cans were provided with 90 mg of top coating by applying a roll coater. During application no ink pick up observed. Wetting of layer 2 over layer 1 was found to be excellent, without bleeding of the colors. The coated cans were heated up in a box oven for 30 seconds at 210 °C. The cans were checked physically on tackiness and cure response. Next the cans were allowed to cure for 3 minutes at 210 °C. As reference, wet inked cans were also coated with the commercially available water-based coating NovoShield 4718E (Comparative Example A). The dry film weight was approximately 80 mg. After cooling down, the coatings were tested on the following properties:
- Adhesion (on substrate and intercoat via tape test with cross cuts)
- Water and water vapor pasteurization resistance
- Scratch/mar resistance
- Curing/cross linking (MEK rubs)
- Color and gloss (Optical)
- Surface defects in cured film (Digital microscope)
- Deformability (stretch and compression)

The top coatings were prepared as follows: a 250 ml glass vessel is charged with the compounds described in Table 1 and thoroughly homogenized under stirring. The ingredients of the coating compositions of Comparative Example A and Examples 1 to 5 are tabulated in Table 1.

**Table 1: Coating compositions**

| | **Comparative Example A: NovoShield 4718E** | **Example 1** | **Example 2** | **Example 3** | **Example 4** | **Example 5** |
|---|---|---|---|---|---|---|
| ***Compound*** | | **% (m/m)** | **% (m/m)** | **% (m/m)** | **% (m/m)** | **% (m/m)** |
| Cymel 303 LF | | 63.9 | 57.8 | 63.9 | | |
| Pluriol BP40E | | 12.8 | 28.5 | | 12.8 | 12.8 |
| Adhesion promoter | | 9.6 | | 9.6 | 9.6 | 9.6 |
| Water | | 10.2 | 10.2 | 10.2 | 10.2 | 10.2 |
| Sulfonic acid catalyst | | 0.3 | 0.3 | 0.3 | 0.3 | 0.3 |
| Wax emulsion | | 1.8 | 1.8 | 1.8 | 1.8 | 1.8 |
| Flow additive | | 0.4 | 0.4 | 0.4 | 0.4 | 0.4 |
| Wetting agent | | 1.0 | 1.0 | 1.0 | 1.0 | 1.0 |
| Tween 81 | | | | 12.8 | | |
| Cymel 1170 | | | | | 63.9 | |
| Cymel UM-15 | | | | | | 63.9 |

After cooling down, the coatings were tested on the following properties:
- Adhesion (on substrate and intercoat via tape test with cross cuts)
- Water and water vapor pasteurization resistance
- Scratch/mar resistance
- Curing/cross linking (MEK rubs)
- Color and gloss (Optical)
- Surface defects in cured film (Digital microscope)
- Deformability (stretch and compression)

The results of these tests are shown in the Table below.

**Table 2: Properties**

| ***Performance tests*** | **Comparative Example A: NovoShield 4718E** | **Example 1** | **Example 2** | **Example 3** | **Example 4** | **Example 5** |
|---|---|---|---|---|---|---|
| Appearance after 30 s, 210 °C | Tack-free | Tack-free | Tack-free | Tack-free | Slightly tacky | Tack-free |
| Appearance after 210 s, 210 °C | Tack-free, transparent | Tack-free, transparent | Tack-free, transparent | Tack-free, transparent | Tack-free, transparent | Tack-free, transparent |
| Appearance after pasteurization (95 °C, 1 hours) | No blushing nor waterspots No blistering | No blushing nor waterspots No blistering | No blushing nor waterspots No blistering | No blushing nor waterspots No blistering | No blushing nor waterspots No blistering | No blushing nor waterspots No blistering |
| Adhesion | Excellent | Excellent | Excellent | Excellent | Excellent | Excellent |
| Scratch resistance | High | High | High | High | High | High |
| Gloss | Fair | High | High | High | High | High |
| MEK double rubs | >50 | >50 | >50 | >50 | >50 | >50 |
| Deformability | Excellent | Excellent | Excellent | Excellent | Excellent | Excellent |

These results show that the coating compositions of Example 1 to 5 (in accordance with the invention) generally have similar properties as the coating composition of Comparative Example A. All coating compositions according to the invention demonstrate a better gloss level than the comparative coating composition.

### Examples 6 to 10

Bright 33 cl aluminum cans were provided with 40 to 60 mg of ink by using a roll coater system. The inks are typically used in 2-piece beer and beverage can production. The colors studied, supplied by INX International Ink Co, are black, green, red, blue and yellow. The white ink is produced by DIC Corporation.

The wet inked cans were provided with 90 mg of top coating by applying a roll coater. During application no ink pick up observed. Wetting of layer 2 over layer 1 was found to be excellent, without bleeding of the colors. The coated cans were heated up in a box oven for 35 seconds at 220 °C. The cans were checked physically on tackiness and cure response. Next the cans were allowed to cure for 3 minutes at 220 °C. As reference, wet inked cans were also coated with a composition according to US 4,154,891 (Comparative Example B). The dry film weight was approximately 80 mg. After cooling down, the coatings were tested on the following properties:
- Adhesion (on substrate and intercoat via tape test with cross cuts)
- Water and water vapor pasteurization resistance
- Sterilization resistance
- Scratch resistance
- Curing/cross linking (MEK rubs)
- Color and gloss (Optical)
- Surface defects in cured film (Digital microscope)
- Deformability (stretch and compression)

The top coatings were prepared as follows: a 250 ml glass vessel is charged with the compounds described in Table 3 and thoroughly homogenized under stirring. The ingredients of the coating compositions of Comparative Example B and Examples 6 to 10 are tabulated in Table 3 (Example 8 is non-inventive)

**Table 3: Coating compositions**

| | **Example 6** | **Example 7** | **Example 8** | **Example 9** | **Example 10** | **Comparative Example B** |
|---|---|---|---|---|---|---|
| ***Compound*** | **% (m/m)** | **% (m/m)** | **% (m/m)** | **% (m/m)** | **% (m/m)** | **% (m/m)** |
| Cymel 3745 | 41.74 | 64.23 | 46.60 | 79.40 | 95.38 | |
| Cymel 303 LF | | | | | | 24.46 |
| Pluriol BP40E | 20.87 | 0.54 | 23.30 | | | 8.58 |
| Alkoxylated polyol | 20.87 | 12.74 | 11.65 | 3.97 | 1.36 | |
| Adhesion promoter | 3.76 | 9.63 | 4.19 | 3.97 | 1.36 | |
| Water | 8.35 | 5.35 | 9.32 | 3.97 | 1.36 | 4.29 |
| Tego Twin 4000 | 0.06 | 0.54 | 0.07 | 0.12 | 0.04 | 0.86 |
| Wax dispersion | 4.17 | 5.35 | 4.66 | 7.94 | 0.27 | |
| Nacure 155 | 0.06 | 0.32 | 0.07 | 0.16 | 0.05 | 0.43 |
| Byk 342 | 0.13 | | 0.14 | 0.48 | 0.16 | |
| Byk 081 | | 0.18 | | | | |
| Tego Glide 410 | | 0.80 | | | | |
| Polyurethane polymer | | | | | | 61.37 |

The results of these tests are shown in the Table below.

**Table 4: Properties**

| ***Performance tests*** | **Example 6** | **Example 7** | **Example 8** | **Example 9** | **Example 10** | **Comparative Example B** |
|---|---|---|---|---|---|---|
| Appearance after 35 s, 220 °C | Tack-free | Tack-free | Tack-free | Tack-free | Tack-free | Tacky |
| Appearance after 210 s, 220 °C | Tack-free, transparent | Tack-free, transparent | Tack-free, transparent | Tack-free, transparent | Tack-free, transparent | Tack-free, transparent |
| Appearance after pasteurization (98 °C, 1 hours) | No blushing nor waterspots No blistering | No blushing nor waterspots No blistering | No blushing nor waterspots No blistering | No blushing nor waterspots No blistering | No blushing nor waterspots No blistering | Color fade No blushing nor waterspots No blistering |
| Appearance after sterilization (121 °C, 40 minutes) | Pass | Pass | Pass | Pass | Pass | Fail |
| Adhesion | Excellent | Excellent | Excellent | Excellent | Excellent | Fail |
| Scratch resistance | Excellent | Excellent | Excellent | High | High | Low |
| Gloss | Fair | Fair | Fair | High | High | Fair |
| MEK double rubs | >50 | >50 | >50 | >50 | >50 | 0 |
| Deformability | Excellent | Excellent | High | High | High | Excellent |

These results show that the coating compositions of Example 6,7,9 and 10 (in accordance with the invention) generally have better properties as the coating composition of Comparative Example B, according to US 4,154,891. All coating compositions according to the invention demonstrate an improved MEK double rub level, adhesion, sterilization resistance and appearance than the comparative coating composition.

## Claims

1. A coating composition comprising a first resin and an aminoplast, and/or an adduct of a first resin and an aminoplast wherein the molar ratio of the first functional groups of the aminoplast and the second functional groups of the first resin is at least 1, and the aminoplast is present in an amount of at least 60 wt%, based on the total weight of first resin and aminoplast, and wherein the coating composition comprises water as solvent and solids in an amount of at least 50 wt%.

2. Composition according to claim 1 wherein the molar ratio is at least 2, preferably at least 5.

3. Composition of any one of claims 1 and 2 wherein the first resin is a polyol.

4. Composition according to any one of the preceding claims further comprising a solvent comprising at least one functional group and capable of reacting with the aminoplast.

5. Composition according to any one of the preceding claims wherein the functional group of the first resin is at least one selected from a hydroxyl and a carboxylic acid.

6. A coated substrate comprising a substrate and a cured coating composition applied to at least part of the substrate, the coating composition being in accordance with any one of the preceding claims.

7. Coated substrate according to claim 6 wherein the substrate is a metal, preferably aluminum.

8. Coated substrate according to any one of claims 6 and 7 wherein the coated substrate is a food or beverage container.

9. Process for preparing a coated substrate comprising steps of:
(a) applying the coating composition according to any one of claims 1 to 5 to a substrate; and
(b) curing the coating composition.

10. Process of claim 9 further comprising the step of shaping the coated substrate to a food or beverage container.

## Patentansprüche

1. Ein Beschichtungsmittel aus einem ersten Harz und einem Aminoplast und/oder ein Addukt aus einem ersten Harz und einem Aminoplast, wobei das Molverhältnis der ersten funktionellen Aminoplastgruppen und der zweiten funktionellen ersten Harzgruppen mindestens 1 beträgt sowie Aminoplast in einer Menge von mindestens 60 Gew.-% des Gesamtgewichts von erstem Harz und Aminoplast vorliegt, und wobei beim Beschichtungsmittel Wasser als Lösungsmittel und Feststoffe in einer Menge von mindestens 50 Gew.-% sowie Aminoplast in einer Menge von mindestens 60 Gew.-% des Gesamtgewichts der Feststoffe vorliegt.

2. Mittel nach Rezeptur 1, wobei das Molverhältnis mindestens 2, vorzugsweise mindestens 5 beträgt.

3. Mittel nach entweder Rezeptur 1 oder 2, wobei das erste Harz ein Polyol ist.

4. Mittel nach einer der vorstehenden Rezepturen, welches außerdem ein Lösungsmittel enthält, das mindestens eine funktionelle Gruppe enthält und mit dem Aminoplast reagieren kann.

5. Mittel nach einem der vorstehenden Rezepturen, wobei die funktionelle erste Harzgruppe mindestens aus einer Hydroxyl- und einer Carbonsäure besteht.

6. Ein beschichtetes Substrat aus einem Substrat und einem gehärteten Beschichtungsmittel, das auf mindestens einen Teil des Substrats aufgebracht wurde, wobei das Beschichtungsmittel einem der vorstehenden Rezepturen entspricht.

7. Beschichtetes Substrat entsprechend Rezeptur 6, wobei das Substrat ein Metall, vorzugsweise Aluminium, ist.

8. Beschichtetes Substrat nach Rezeptur 6 oder 7, wobei das beschichtete Substrat ein Lebensmittel- oder Getränkebehälter ist.

9. Das Verfahren zur Herstellung eines beschichteten Substrats umfasst die folgenden Schritte:
(a) Aufbringen des Beschichtungsmittels mit einer der Rezepturen 1 bis 5 auf ein Substrat; und
(b) Aushärtung des Beschichtungsmittels.

10. Das Verfahren bei Rezeptur 9 beinhaltet darüber hinaus das Formen des beschichteten Substrats zu einem Lebensmittel- oder Getränkebehälter.

## Revendications

1. Composition de revêtement comprenant une première résine et un aminoplaste, et / ou un adduit d'une première résine et d'un aminoplaste, où le rapport molaire des premiers groupes fonctionnels de l'aminoplaste et les seconds groupes fonctionnels de la première résine est d'au moins 1, et l'aminoplaste est présent dans une quantité d'au moins 60 % mas, basée sur le poids total de la première résine et de l'aminoplaste, et où la composition de revêtement comprend de l'eau en tant que solvant et des solides dans une quantité d'au moins 50 % mas, et l'aminoplaste est présent dans une quantité d'au moins 60 % mas, basée sur le poids total des solides.

2. Composition selon l'affirmation 1, où le rapport molaire est d'au moins 2, de préférence d'au moins 5.

3. Composition de l'une des déclarations 1 et 2, où la première résine est un polyol.

4. Composition selon l'une des déclarations précédentes, comprenant aussi un solvant incluant au moins un groupe fonctionnel et capable de réagir avec l'aminoplaste.

5. Composition selon l'une des déclarations précédentes, où le groupe fonctionnel de la première résine est au moins sélectionné à partir d'un hydroxyle et d'un acide carboxylique.

6. Substrat enduit comprenant un substrat et une composition de revêtement durci, appliquée sur au moins une partie du substrat, la composition de revêtement étant conforme à l'une des affirmations précédentes.

7. Substrat enduit conformément à l'affirmation 6, où le substrat est un métal, de préférence de l'aluminium.

8. Substrat enduit conformément à l'une des affirmations 6 et 7, où le substrat enduit est un contenant à nourriture ou boisson.

9. Processus de préparation d'un substrat enduit comprenant les étapes suivantes :
(a) application de la composition de revêtement conformément à l'une des affirmations 1 à 5 sur un substrat ; et
(b) durcissement de la composition de revêtement.

10. Processus de l'affirmation 9 comprenant également l'étape de façonnage du substrat enduit sur un contenant à nourriture ou boisson.
